# EUROPEAN PATENT APPLICATION

(11) **EP 3 907 027 A1**
(43) Date of publication of application: **10.11.2021**
(21) Application number: 21172802.7
(22) Date of filing: 07.05.2021
(51) Int. Cl.: B22F 10/28, B22F 10/366, B33Y 10/00, B33Y 50/02, B22F 12/45

(54) **VERTICALLY STAGGERED FUSING SEQUENCE FOR A THREE-DIMENSIONAL PRINTING SYSTEM**

(30) Priority: 09.05.2020 US 202062757819 P
(71) Applicant: LayerWise N.V., 3001 Heverlee (BE)
(72) Inventor: NEIRINCK, Bram, 3360 Opvelp (BE); HOLMSTOCK, Neils, 3012 Wilsele-Putkapel (BE); LIETAERT, Karel Jef, 8500 Kortrijk (BE)
(74) Representative: dompatent von Kreisler Selting Werner - Partnerschaft von Patent- und Rechtsanwälten mbB

(57) **Abstract**

A system for manufacturing a three-dimensional article includes a support plate, a powder dispenser, a fusing apparatus, and a controller. The controller is configured to operate various printer components of the system to: (1) dispense a first layer of powder, (2) fuse a first boundary contour and a first infill section at least through the first layer of powder and are laterally separated by an unfused zone of powder, (3) dispense a second layer of powder over the first layer of powder, (4) fuse the unfused zone of powder through the first and second layers of powder to define a first fused connecting zone, (5) dispense a third layer of powder over the second layer of powder, (6) fuse a second boundary contour and a second infill section through the second and third layers of powder.

## Description

### Cross-Reference to Related Applications

This non-provisional patent application claims priority to U.S. Provisional Application Serial Number 62/757,819, Entitled "Vertically Staggered Fusing Sequence for a Three-Dimensional Printing System" by Bram Neirinck et al., filed on November 9, 2018, incorporated herein by reference under the benefit of U.S.C. 119(e).

### Field of the Invention

The present disclosure concerns an apparatus and method for the digital fabrication of three dimensional (3D) articles utilizing powder materials. More particularly, the present disclosure concerns a manufacturing sequence that improves surface quality and accuracy of the articles.

### Background

Three dimensional (3D) printing systems are in rapidly increasing use for purposes such as prototyping and manufacturing. One type of three dimensional printer utilizes a layer-by-layer process to form a three dimensional article of manufacture from powdered materials. Each layer of powdered material is selectively fused using an energy beam such as a laser, electron, or particle beam. One challenge with this type of fabrication a tendency of the powder to shrink as it is fused. Variable shrinkage can impact a surface quality of articles being fabricated.

### Brief Description of the Figures

FIG. 1 is a block diagram schematic of a three-dimensional printing system.
FIG. 2 is a flowchart depicting an embodiment of a method for fabricating a three-dimensional article.
FIG. 3A is a diagram depicting a horizontal cross-section of a three dimensional article having an oval cross-sectional shape. The horizontal cross section intersects a boundary contour 24 and an infill section 25.
FIG. 3B is a diagram depicting a vertical cross-section of a portion of a three-dimensional article. The variable integers N-1, N, N+1, etc., correspond to dispensed layers of powder.
FIG. 4A is a schematic cross-section depicting dispensing first layer of powder.
FIG. 4B is a schematic cross-section depicting fusion of first boundary contour fused at least through the first layer of powder.
FIG. 4C is a schematic cross-section depicting dispensing a second layer of powder over the first layer of powder.
FIG. 4D is a schematic cross-section depicting fusion of a first infill section fused through the first and second layers of powder. The first infill section is illustrated as being within the first boundary contour.
FIG. 4E is a schematic cross-section depicting dispensing a third layer of powder over the second layer of powder.
FIG. 4F is a schematic cross-section depicting fusion of a second boundary contour fused through the second and third layers of powder and fusing to the first boundary contour. Although not illustrated, the second boundary contour may be laterally shifted relative to the first boundary contour depending on a shape of a three-dimensional article being fabricated.
FIG. 4G is a schematic cross-section depicting dispensing a fourth layer of powder over the third layer of powder.
FIG. 4H is a schematic cross-section depicting fusion of a second infill section fused through the third and fourth layers of powder and fusing to the first infill section.
FIG. 5A is a schematic cross-section depicting dispensing a first layer of powder.
FIG. 5B is a schematic cross-section depicting fusion of a first boundary contour and a first infill section. Between the first boundary contour and the first infill section is a first separation zone of unfused powder.
FIG. 5C is a schematic cross-section depicting dispensing a second layer of powder over the first layer of (partially fused) powder.
FIG. 5D is a schematic cross-section depicting fusion of a first connecting zone through the first and second layers of powder. The first connecting zone is also fused to the first boundary contour and the first infill section.
FIG. 5E is a schematic cross-section depicting dispensing a third layer of powder over the second layer of (partially fused) powder.
FIG. 5F is a schematic cross-section depicting fusion of a second boundary contour and a second infill section through the second and third layers of powder. The second boundary contour also fuses to the first boundary contour and to the first connecting zone. The second infill section also fuses to the first infill section and to the first connecting zone.
FIG. 5G is a schematic cross-section depicting dispensing of a fourth layer of powder over the third (partially fused) layer of powder.
FIG. 5H is a schematic cross-section depicting fusion of a second connecting zone through the fusion of a second connecting zone through the third and fourth layers of powder. The second connecting zone is also fused to the second boundary contour, the second infill section, and the first connecting zone.
FIG. 6A is a schematic cross-section dispensing an Nth layer of powder.
FIG. 6B is a schematic cross-section depicting fusing a an infill section at least through the Nth layer of powder.
FIG. 6C is a schematic cross-section depicting dispensing an (N+1)th layer of powder.
FIG. 6D is a schematic cross-section depicting fusing a contour boundary through layers of powder N and N+1.

### Summary

In a first aspect of the disclosure, a system for manufacturing a three-dimensional article includes a support plate, a powder dispenser, a fusing apparatus, and a controller. The fusing apparatus is configured to form and scan an energy beam. The controller is configured to (1) operate the powder dispenser to dispense a first layer of powder, (2) operate the fusing apparatus to scan the energy beam upon the first layer of powder to fuse a first boundary contour and a first infill section that are fused at least through the first layer of powder and are separated by a unfused zone of powder, (3) operate the powder dispenser to dispense a second layer of powder over the first layer of powder, (4) operate the fusing apparatus to scan the energy beam upon the second layer of powder to fuse the unfused zone through the first and second layers of powder to define a first fused connecting zone, the first fused connecting zone couples the first boundary contour to the first infill section, (5) operate the powder dispenser to dispense a third layer of powder over the second layer of powder, and (6) operate the fusing apparatus to scan the energy beam upon the third layer of powder to fuse a second boundary contour and a second infill section that are fused through the second and third layers of powder, the second boundary contour is fused to the first boundary contour, the second infill section is fused to the first infill section. Step (3) can include lowering the support plate to compensate for a layer of dispensed and fused powder.

The boundary contours collectively define boundaries of the three-dimensional article. Therefore, the infill sections are all within boundary contours. The infill sections are fused by scanning the laser over a hatch pattern that generally fills the section enclosed by the contour.

In one implementation the support plate includes a support surface. The first layer of powder is dispensed upon the support surface.

In another implementation, the first layer of powder is dispensed upon at least one previously dispensed layer of powder. The at least one previously dispensed layer of powder can be selectively fused before the first layer of powder is dispensed.

In yet another implementation, the powder being dispensed is a metal powder. The fusing apparatus can generate and scan a single energy beam or multiple energy beams that can scan independently of each other. The energy beam can include one or more of a laser beam, a particle beam, and a beam of electrons.

In a further implementation, the fusing apparatus includes a laser and scanning optics. The laser can generate an output beam powder of more than 100 watts, more than 500 watts, or even more than 1000 watts.

In a yet further implementation, the controller is further configured to operate the powder dispenser to dispense a fourth layer of powder over the third layer of powder and operate the fusing apparatus to scan the energy beam upon the fourth layer of powder to fuse a second fused connecting zone through the third and fourth layers of powder, the second fused connecting zone is fused to the first fused connecting zone.

### Detailed Description of the Preferred Embodiments

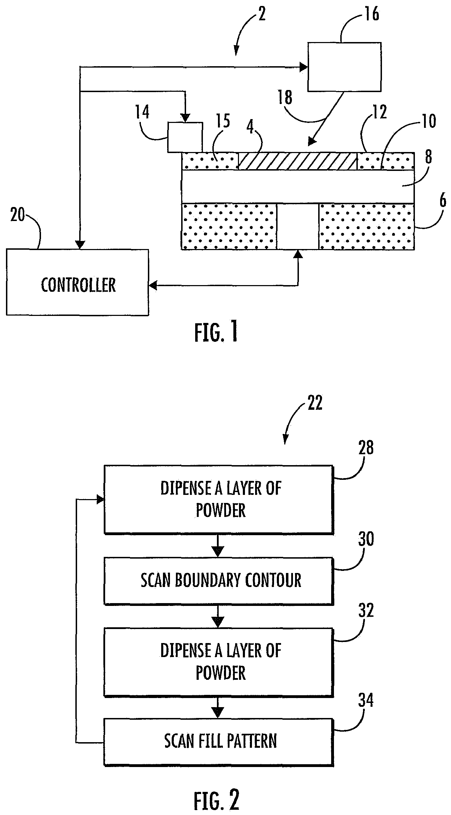

FIG. 1 is a block diagram schematic of a three-dimensional printing system 2 for fabricating a three-dimensional article 4. System 2 includes a build module 6 having a motorized platform 8. The motorized platform 8 has a support surface 10 upon which the three-dimensional article 4 is formed. The motorized platform 8 is configured to vertically position an upper surface 12 (either the upper surface of article 4 or surface 10) at an optimal height to allow a powder dispenser 14 to dispense a layer of powder 15 onto the upper surface. In an illustrative embodiment, the motorized platform 8 will be lowered before or after a layer of powder 15 is dispensed.

In an illustrative embodiment, the dispenser 14 dispenses layers of metal powder upon the motorized support 8. The layers can be any practical thickness but a typical layer thickness can be in a range of 10 to 100 microns. More particularly, a typical thickness can be in a range of 20 to 50 microns.

A fusing apparatus 16 is configured to form and scan an energy beam 18 over the upper surface 12 of dispensed powder 15 to selectively fuse the powder 15. The energy beam 18 can be a high powered optical beam, a particle beam, or an electron beam. For a fusion of metal powder, a laser that outputs a beam having a power level of more than 100 watts is typical. Some lasers can output 500 watts, 1000 watts, or more than a kilowatt. The fusing apparatus 16 can include a laser, forming optics and scanning optics for forming and scanning the laser beam 18 over the surface 12.

The motorized platform 8, the powder dispenser 14, and the fusing apparatus 16 are all under control of a controller 20. The controller 20 includes a processor coupled to an information storage device. The information storage device includes a non-transient or non-volatile storage device that stores software instructions. When executed by the processor, the software instructions control various portions of system 2 including the motorized platform 8, the powder dispenser 14, and the fusing apparatus 16.

The illustrated embodiment of FIG. 1 depicts a deposition and fusion of layers of powder upon a reusable motorized platform 8. In other embodiments, the layers of powder can be dispensed and fused onto a substrate or workpiece that becomes a final product or article 4. The methods of this disclosure apply for either of these embodiments and all related variations.

The controller 20 includes a processor (not shown) and a non-transient or non-volatile storage device (not shown). The storage device stores software instructions. When executed by the processor, the processer performs operations such as those described infra or supra including operations depicted by FIGS. 2, 3A-B, 4A-H, 5A-H, and 6A-D. The controller 20 is said to be configured to perform operations which is tantamount to the software instructions being executed by the processor. Thus the controller, as a processor and storage device, is said to perform the operations by executing the instructions.

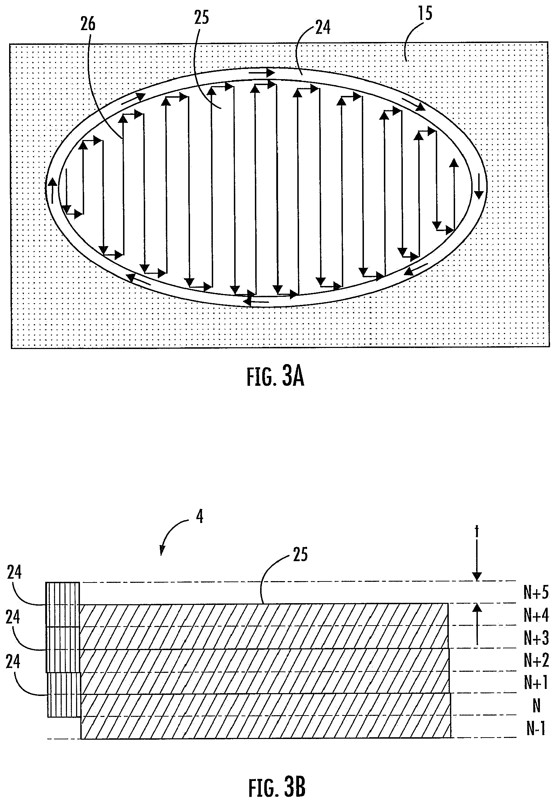

FIG. 2 is a flowchart depicting an embodiment of a method 22 for fabricating a three-dimensional article 4. Method 22 is performed by controller 20. Method 22 entails an alternating sequence between scanning contours and scanning infill patterns to eliminate surface and subsurface defects. Before discussing FIG. 2, refer to FIG. 3A for some definitions.

FIG. 3A is a diagram depicting a horizontal cross section of a three dimensional article having an oval cross-sectional shape. The oval is to be selectively fused from one or more layers of powder 15. To define and solidify the outer surface, a sequence of boundary contours 24 are fused. In an illustrative embodiment, the boundary contour 24 can be formed by scanning the energy beam 18 over the powder 15 and to trace out the shape of the oval in the indicated direction.

To solidify an area inside the outer surface, a series of infill sections are fused. This can be done by scanning the energy beam 18 over a "hatch pattern" 26 which is indicated by the thin arrows that illustrate motion of the beam 18 over the upper surface 12 of powder 15. The longer arrows are a scan direction and the shorter arrows are a lateral offset direction between scans. Hatch patterns for the fusion of infill sections can vary considerably.

It is to be understood that the boundary contour 24 is not fused through the same layers of powder as the infill section 25. According to an illustrative embodiment, the boundary contours 25 and infill sections 25 are individually fused through more than one layer of powder at a time.

Referring back to FIG. 2, the method 22 illustrated begins with a layer of selectively fused powder that is already dispensed present and defining an upper surface 12. A layer of powder 15 is dispensed upon the upper surface 12 according to 28. According to 30, the energy beam 18 is scanned upon the dispensed powder 15 layer to fuse a boundary contour 24 through two layers of powder 15 and to fuse to a previously fused boundary contour 24 below. According to 32 a layer of powder is dispensed. According to 34, the energy beam 18 is scanned to define an area fill hatch pattern 26 through the previous two layers of powder and connects with underlying fused material below the previous two layers. Then the sequence of steps 28-32 can be repeated to form a remainder of article 4. As part of steps 28 and 32, the motorized platform 8 can be lowered either before or after dispensing a layer of powder 15.

The method 22 is unique in the following respects in combination: (1) The boundary contour scan fuses two layers of powder at a time. (2) The infill section scan fuses two layers of powder at a time. (3) The boundary contour scan and infill section scans impinge upon alternating layers of powder. (4) The contour fusion and the infill fusion depths are staggered vertically due to the alternating sequence.

FIG. 3B is a vertical cross-sectional diagram of a portion of a three-dimensional article fabricated using the method of FIG. 2. The dashed lines in the figures represent a separation between layers of powder of thickness t that have been deposited and fused. The layers, in order of deposition, start with layer N-1. Layer N is deposited over layer N-1, layer N+1 is deposited over layer N, and so on. Each illustrated layer has a thickness t after fusion.

Each boundary contour 24 is fused through two powder layers. Thus, each boundary contour 24 has a thickness of 2 times t. Each infill section 25 is fused through two powder layers. Thus, each infill section 25 is of thickness 2t.

The boundary contours 24 and infill sections 25 are vertically staggered by the vertical distance t. The lowest illustrated infill section 25 is fused through layers N-1 and N. The lowest illustrated boundary contour 24 is fused through layers N and N+1.

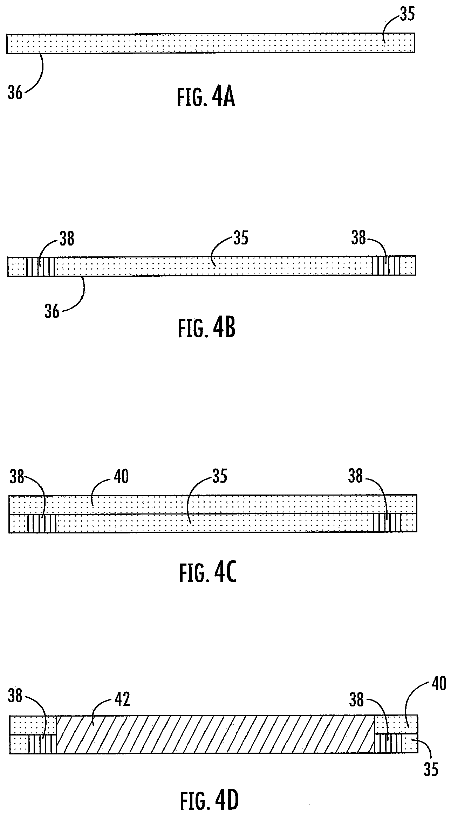

FIGS. 4A-4H are cross-sectional views that illustrate sequential steps of a method similar to that of method 22. According to FIG. 4A a first layer of powder 35 is dispensed upon a surface 36. The surface 36 can be defined by a previously dispensed layer of powder, a support surface, or previously fabricated article such as a pre-machined article. According to FIG. 4B, energy beam 18 is scanned over the first layer of powder 35 to selectively fuse a first boundary contour 38 which is fused at least through the first layer 35 of powder 15.

According to FIG. 4C, a second layer of powder 40 is dispensed over the first layer of powder 35. According to FIG. 4D, the energy beam 18 is scanned upon the second layer of powder 40 to fuse a first infill section 42 that is laterally inside the first contour 38. The first infill section 42 is fused through the first 35 and second 40 layers of powder.

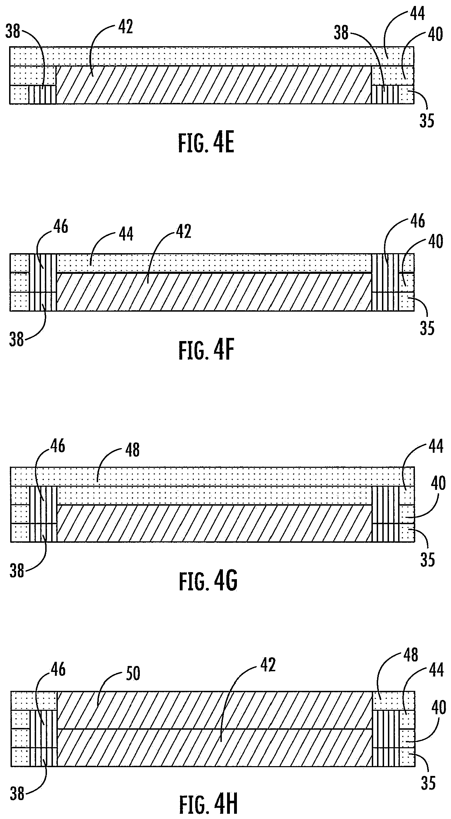

According to FIG. 4E, a third layer of powder 44 is dispensed over the second layer of powder 40. According to FIG. 4F, energy beam 18 is scanned over the third layer of powder 44 to fuse a second boundary contour 46. The second boundary contour 46 is fused through the second 40 and third 44 powder layers and is also fused to the first boundary contour 38.

According to FIG. 4G, a fourth layer of powder 48 is dispensed over the third layer of powder 44. According to FIG. 4H, energy beam 18 is scanned over the fourth layer of powder 48 to fuse a second infill section 50 that is laterally inside the second boundary contour 46 and is fused through the third 44 and fourth 48 layers of powder. The second infill section 50 is also fused to the first infill section 42.

Process steps of FIGS. 4E-4H can thereafter be repeated until most or all of a three-dimensional article 4 is formed. As is apparent, this results in an alternating sequence of fused contours and fused infill sections that was illustrated in FIG. 3B.

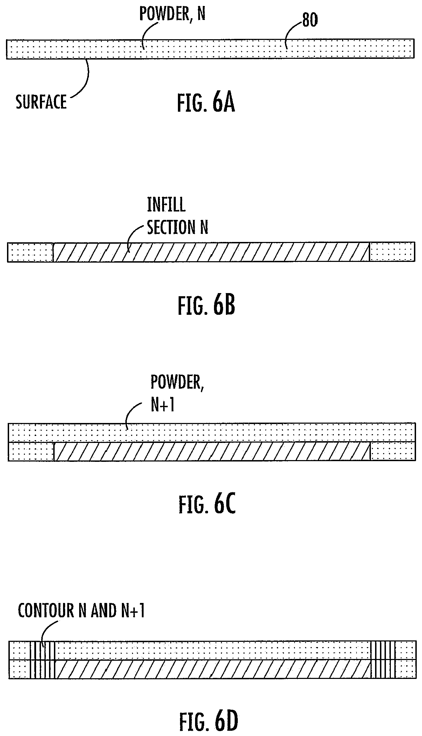

In the methods of FIG. 2 and FIGS. 4A-H, the first contour layer is illustrated as fused before the first infill area. This is for illustrative purposes only. For example, in FIG. 2, method 22 can start with step 32 and then proceed to step 34 before looping back to step 28. This will be further illustrated infra with respect to FIGS. 6A-D.

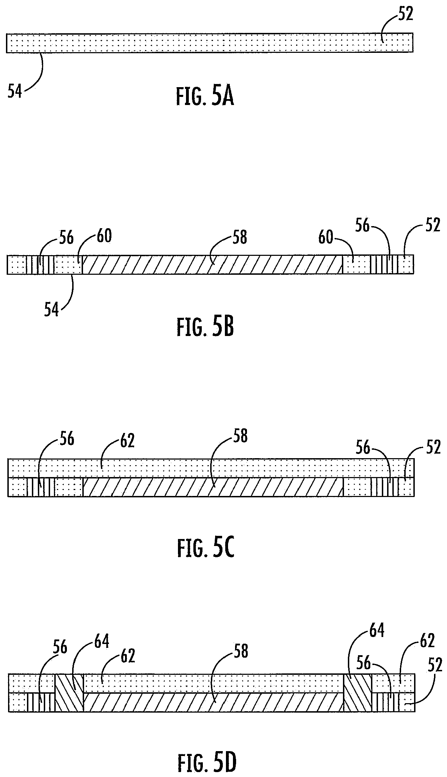

FIGS. 5A-5H are cross-sectional views illustrating sequential steps of an alternative method. According to FIG. 5A, a first layer of powder 52 is dispensed upon a surface 54. The surface 54 can be defined by a previously dispensed layer of powder, a support surface, or previously fabricated article. According to FIG. 5B, energy beam 18 is scanned upon the first layer of powder 52 to fuse a first boundary contour 56 and a first infill section 58. Between the first boundary contour 56 and the first infill section 58 is an unfused first separation zone 60 of unfused powder. The first separation zone 60 decouples the first boundary contour 56 from the first infill section 58.

According to FIG. 5C, a second layer of powder 62 is dispensed over the first layer of powder 52. According to FIG. 5D, energy beam 18 is scanned over the second layer of powder 62 to fuse a first connecting zone 64 through the first 52 and second 62 layers of powder. The first connecting zone 64 laterally couples the first boundary contour 56 to the first infill section 58.

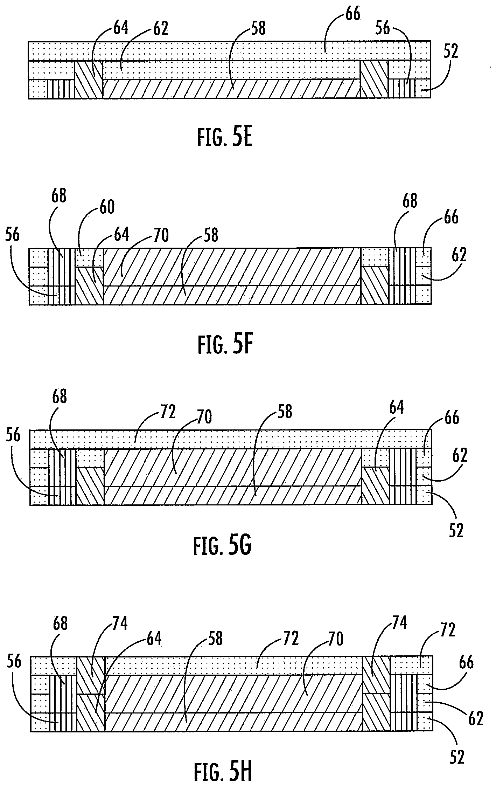

According to FIG. 5E, a third layer of powder 66 is dispensed over the second layer of powder 62. According to FIG. 5F, energy beam 18 is scanned over the third layer of powder 66 to fuse a second boundary contour 68 and a second infill section 70. The second boundary contour 68 and second infill section 70 are both fused through the second 62 and third 66 layers of powder. The second boundary contour 68 is fused onto the first boundary contour 56. The second infill section 70 is fused onto the first infill section 58.

According to FIG. 5G, a fourth layer of powder 72 is dispensed over the third layer of powder 66. According to FIG. 5H, energy beam 18 is passed over the fourth layer of powder 72 to fuse second connecting zone 74 through the third 66 and fourth 72 layers of powder and to the first connecting zone 64. The first connecting zone 64 is now fused to the first 56 and second 68 boundary contours and to the first 58 and second 70 infill sections. The second connecting zone 74 will be fused to the second boundary contour 68 and the second infill section 70. The steps of FIGS. 5E to 5H can be repeated to complete formation of a three-dimensional article 4.

FIGS. 6A-D are cross-sectional views illustrating an alternative illustrative starting point compared to FIGS. 4A-H. However, this illustration does not necessarily represent a different method or embodiment as will explained infra.

According to FIG. 6A, an Nth layer of powder 80 is dispensed. The Nth layer of powder is dispensed upon a surface which can be a build plate, a previously dispensed layer of powder, or a previously fabricated article.

For example suppose N = 2 and we equate the step of FIG. 6A with that of FIG. 4C. What is not shown in FIG. 6A is that there is a partially fused layer of powder under this layer.

According to FIG. 6B, an Nth infill section is fused. The Nth infill section can pass through either one or two layers of powder.

For example, suppose that we equate FIG. 6B with FIG. 4D. What is not shown in FIG. 6B is an underlying layer of powder that the infill section is fused through. Thus the sequence of FIGS. 6A-D can be equated to that of FIGS. 4C-F.

According to FIG. 6C, a layer of powder N+1 is dispensed. According to FIG. 6D, a boundary contour is fused through layers of powder N and N+1.

In the above description, the fusing apparatus 16 is illustrated as emitting an energy beam 18. It is to be understood that fusing apparatus 16 may emit plural energy beams 18 that can include one or more of electron beams, particle beams, and photon (laser) beams. In some embodiments one beam 18 is used to form the boundary contours 24 and a different beam 18 is used to form the infill sections 25. Yet other embodiments can have multiple beams 18 operating cooperatively to form the infill sections 25 and one or more beams to form the boundary contours 24. In yet further embodiments with plural beams 18, some individual beams may form both contours 25 and infill sections 25. The use of multiple beams 18 can greatly increase the speed of selectively fusing layers of powder 15.

The specific embodiments and applications thereof described above are for illustrative purposes only and do not preclude modifications and variations encompassed by the scope of the following claims.

## Claims

1. A system for manufacturing a three-dimensional article comprising:
a support plate having a support surface;
a powder dispenser;
a fusing apparatus configured to form and scan an energy beam;
a controller including a processor and a non-transient storage device configured to:
operate the powder dispenser to dispense a first layer of powder;
operate the fusing apparatus to scan the energy beam upon the first layer of powder to fuse a first boundary contour and a first infill section that are fused at least through the first layer of powder and are separated by a unfused zone of powder;
operate the powder dispenser to dispense a second layer of powder over the first layer of powder;
operate the fusing apparatus to scan the energy beam upon the second layer of powder to fuse a first connecting zone through the first and second layers of powder, the first connecting zone couples the first boundary contour to the first infill section;
operate the powder dispenser to dispense a third layer of powder over the second layer of powder; and
operate the fusing apparatus to scan the energy beam upon the third layer of powder to fuse a second boundary contour and a second infill section through the second and third layers of powder, the second boundary contour is fused to the first boundary contour, the second infill section is fused to the first infill section.

2. The system of claim 1 wherein the first layer of powder is dispensed upon the support surface.

3. The system of claim 1 wherein the first layer of powder is dispensed upon at least one previously dispensed layer of powder.

4. The system of claim 3 wherein the at least one previously dispensed layer of powder is selectively fused.

5. The system of claim 1 wherein the first, second, and third layers of powder individually have a thickness of 10 to 100 microns.

6. The system of claim 1 wherein the first, second, and third layers of powder individually have a thickness of 20 to 50 microns.

7. The system of claim 1 wherein the energy beam is one or more of a laser beam and an electron beam.

8. The system of claim 1 wherein the controller is further configured to:
operate the powder dispenser to dispense a fourth layer of powder over the third layer of powder; and
operate the fusing apparatus to scan the energy beam upon the fourth layer of powder to fuse a second connecting zone through the third and fourth layers of powder and to the first connecting zone.

9. A method of manufacturing a three-dimensional article comprising:
dispensing a first layer of powder;
scanning an energy beam upon the first layer of powder to fuse a first boundary contour and a first infill section that are fused at least through the first layer of powder and are separated by a unfused zone of powder;
dispensing a second layer of powder over the first layer of powder;
scanning the energy beam upon the second layer of powder to fuse the unfused zone through the first and second layers of powder to define a first connecting zone, the first connecting zone couples the first boundary contour to the first infill section;
dispensing a third layer of powder over the second layer of powder; and
scanning the energy beam upon the third layer of powder to fuse a second boundary contour and a second infill section through the second and third layers of powder, the second boundary control is fused to the first boundary contour, the second infill section is fused to the first infill section.

10. The method of claim 9 wherein the first layer of powder is dispensed upon a support surface.

11. The method of claim 9 wherein the first layer of powder is dispensed upon at least one previously dispensed layer of powder.

12. The method of claim 11 wherein the at least one previously dispensed layer of powder is selectively fused.

13. The method of claim 9 wherein the first, second, and third layers of powder individually have a thickness of 10 to 100 microns.

14. The method of claim 9 wherein the first, second, and third layers of powder individually have a thickness of 20 to 50 microns.

15. The method of claim 9 wherein the energy beam is one or more of a laser beam and an electron beam.

16. The method of claim 9 further comprising:
dispensing a fourth layer of powder over the third layer of powder;
scanning the energy beam over the fourth layer of powder to fuse a second connecting zone through the third and fourth layers of powder, the second fused connecting zone is fused to the first fused connecting zone.

17. A computer-readable storage medium for manufacturing a three-dimensional article, the computer-readable storage medium being non-transitory and having computer-readable program code portions stored therein that in response to execution by a processor cause a three-dimensional printing system to:
operate a powder dispenser to dispense a first layer of powder;
operate a fusing apparatus to scan an energy beam upon the first layer of powder to fuse a first boundary contour and a first infill section that are fused at least through the first layer of powder and are separated by a unfused zone of powder;
operate the powder dispenser to dispense a second layer of powder over the first layer of powder;
operate the fusing apparatus to scan the energy beam upon the second layer of powder to fuse a first connecting zone through the first and second layers of powder, the first connecting zone is couples the first boundary contour to the first infill section;
operate the powder dispenser to dispense a third layer of powder over the second layer of powder; and
operate the fusing apparatus to scan the energy beam upon the third layer of powder to fuse a second boundary contour and a second infill section through the second and third layers of powder, the second boundary contour is fused to the first boundary contour, the second infill section is fused to the first infill section.

18. The computer readable storage medium of claim 17 wherein the processor causes the three-dimensional printing system to:
operate the powder dispenser to dispense a fourth layer of powder over the third layer of powder;
operate the fusing apparatus to scan the energy beam upon the fourth layer of powder to fuse a second connecting zone through the third and fourth layers of powder and fused to the first connecting zone.
